# EUROPÄISCHE PATENTSCHRIFT

(11) **EP 1 185 440 B1**
(45) Veröffentlichungstag und Bekanntmachung des Hinweises auf die Patenterteilung: **04.08.2004**
(21) Anmeldenummer: 00940269.4
(22) Anmeldetag: 25.05.2000
(51) Int. Cl.: B60R 21/16, B60R 21/01

(54) **AUFPRALLSCHUTZVORRICHTUNG**
IMPACT PROTECTION DEVICE
DISPOSITIF DE PROTECTION CONTRE LES CHOCS

(30) Priorität: 02.06.1999 DE 19925378
(43) Veröffentlichungstag der Anmeldung: 13.03.2002
(73) Patentinhaber: Volkswagen Aktiengesellschaft, 38436 Wolfsburg (DE)
(72) Erfinder: WOHLLEBE, Thomas, D-38110 Braunschweig (DE); SINNHUBER, Ruprecht, D-38518 Gifhorn (DE)
(74) Vertreter: Liebl, Thomas, Dipl.-Ing.
(86) Internationale Anmeldenummer: PCT/EP2000/004766
(87) Internationale Veröffentlichungsnummer: WO 2000/074979

(56) Entgegenhaltungen:
- EP-A- 0 836 971
- DE-A- 19 816 075
- DE-A- 19 904 740

## Beschreibung

Die vorliegende Erfindung betrifft eine Aufprallschutzvorrichtung für Fahrzeuginsassen mit einem ersten aufblasbaren, zum Schutz des Fahrzeuginsassen vorgesehenen Airbag und mit Mitteln zum, kontrollierten Aufblasen des ersten Airbags.

Eine derartige Aufprallschutzvorrichtung ist beispielsweise durch die EP 0 836 971 A1 bekanntgeworden.

Zur Vermeidung einer Gefährdung des Fahrzeuginsassen durch den ersten Airbag soll dieser in Abhängigkeit von der Situation vor dem ersten Airbag aktiviert bzw. gesteuert aufgeblasen werden. Eine im Fahrzeuginnenraum vorhandene Innenraumsensorik des ersten Airbags ist so ausgebildet, dass das Ausbreitungsverhalten eines Abschnitts des ersten Airbags erfasst wird. Mittels einer Steuereinrichtung kann die Füllcharakteristik des bekannten, ersten Airbags beeinflusst werden. Der bekannte Airbag dient sowohl der Abtastung des Bereichs vor diesem als auch zum Aufprallschutz. Der Airbag muss deshalb schnell und aggressiv aufgeblasen werden.

In der Regel ist allerdings eine komplexe Innenraumsensorik zur Erfassung der Situationen vor dem ersten Airbag erforderlich. Mögliche Situationen können sein: Fahrzeuginsasse ist ein sitzender Erwachsener oder ein vor der Instrumententafel stehendes Kind; der Fahrzeuginsasse befindet sich in korrekter Sitzhaltung oder nicht ("in position" oder "out of position"; Fahrzeuginsasse fliegt durch "pre-braking" nach vorn).

Aufgabe der Erfindung ist es, einerseits ohne eine aufwendige Innenraumsensorik auszukommen und andererseits möglichst sämtliche Situationen vor dem ersten Airbag sicher erfassen zu können.

Gemäß Patentanspruch 1 weist die Aufprallschutzvorrichtung einen zweiten, mit Sensor-Mitteln versehenen, aufblasbaren Airbag auf, der zur Abtastung einer festgelegten Zone im Aufblasbereich des ersten Airbags vorgesehen ist, wobei die vom Sensor-Mittel gewonnene Information zur Steuerung der Mittel zum kontrollierten Aufblasen des ersten Airbags verwendet wird. Die Patentansprüche 2 bis 14 betreffen besonders zweckmäßige Weiterbildungen der

Erfindung. Die erfindungsgemäße Aufprallschutzvorrichtung weist zwei Airbags auf, die unterschiedlichen Funktionen zugeordnet sind. Durch diese Funktionstrennung kann der zweite Airbag, der kleiner als der erste Airbag ausgestaltet sein kann, schnell, aber "weich", d.h. nicht aggressiv, den Fahrzeuginsassen nicht gefährdend aufgeblasen werden.

Als Sensoren des zweiten Airbags kommen insbesondere Bänder, Kontaktfolien oder druckempfindliche Flächen in Betracht. Es kann eine festgelegte Zone vor dem ersten Airbag überwacht werden ("keep out zone"). Zur schnellen Erfassung und ausreichenden Umsetzung von Sensorsignalen ist der Einsatz einer early-crash-Sensorik sinnvoll. Nach seiner erledigten Aufgabe erschlafft der zweite Airbag und wird von dem nunmehr aktivierten ersten Airbag weggedrückt, so daß keine Behinderung dieses Airbags für den eigentlichen Aufprallschutz auftritt. Durch die Auswertung der Sensorsignale wird der erste Airbag situationsgerecht oder überhaupt nicht aufgeblasen.

Zur Unterstützung des zweiten Airbags (Tast-Airbag) können weitere Sensoren im Fahrzeuginnenraum angeordnet sein. Wenn ein Gurtsensor vorgesehen ist, kann der erste Airbag (Aufprallschutz-Airbag) auch in Abhängigkeit von der Gurtbenutzung gesteuert aufgeblasen werden. Zur Erkennung einer Sitzbelegung (evtl. auch einer Kindersitzerkennung) sollte zusätzlich eine Gewichtserfassung am Sitz eingesetzt werden, mit der auch der sitz- und/oder fahrzeugbezogene Schwerpunkt des Fahrzeuginsassen ermittelt werden kann. Zur Erfassung von Sonderfällen (z.B. wenn sich ein Fahrzeuginsasse auf dem Sitz befindet und gleichzeitig ein Kind vor der Instrumententafel steht) kann auch noch eine Gewichtserfassung im Fußraum vor dem Fahrzeugsitz eingesetzt werden, z.B. eine druckempfindliche Sensormatte.

Sechs Ausführungsbeispiele der Erfindung sind in der schematischen Zeichnung dargestellt und werden in der nachfolgenden Beschreibung erläutert. Es zeigt:
- **Fig. 1**: eine erste Aufprallschutzvorrichtung mit einem Aufprallschutz-Airbag und mit einem Tast-Airbag;
- **Fig. 2**: eine zweite Aufprallschutzvorrichtung mit einem Aufprallschutz-Airbag und mit einem Tast-Airbag;
- **Fig. 3**: eine dritte Aufprallschutzvorrichtung mit einem Aufprallschutz-Airbag und mit einem Tast-Airbag;
- **Fig. 4**: einen ersten Tast-Airbag für eine Aufprallschutzvorrichtung gemäß den Figuren. 1 bis 3;
- **Fig. 5**: einen zweiten Tast-Airbag;
- **Fig. 6a**: einen dritten Tast-Airbag im nicht-aktivierten Zustand;
- **Figuren 6b, 6c**: den Test-Airbag nach Fig. 6a im aktivierten Zustand.

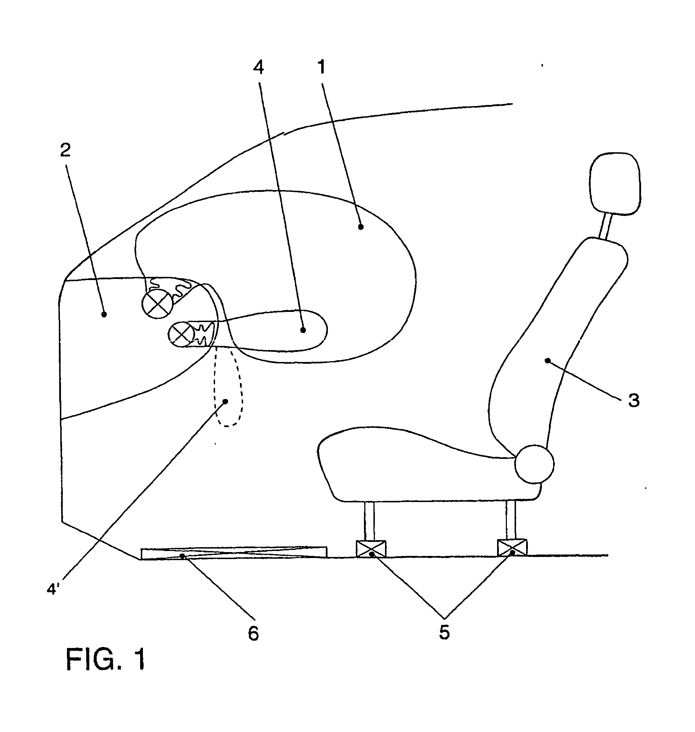

Aus der **Fig. 1** ist ersichtlich, daß eine Aufprallschutzvorrichtung einen Aufprallschutz-Airbag 1 aufweist, der zum Aufprallschutz eines Fahrzeuginsassen vorgesehen ist. Der Aufprallschutz-Airbag 1 ist im nicht-aktivierten Zustand vollständig in der Instrumententafel 2 untergebracht. Nach der Aktivierung tritt der aufgeblasene Aufprallschutz-Airbag 1, wie in der Fig. 1 gezeigt, aus der Instrumententafel 2 in Richtung Fahrzeuginnenraum aus, um den auf dem Fahrzeugsitz 3 sitzenden Fahrzeuginsassen vor dem Aufprall auf die Instrumententafel 2 zu schützen. Der Aufprallschutz-Airbag 1 ist als "top, mid- oder low mount airbag" möglich. Zusätzlich umfaßt die Aufprallschutzvorrichtung einen sog. Tast-Airbag 4. Der AufprallschutzAirbag 1 und der Tast-Airbag 4 können jeweils mittels eines Gasgenerators aufgeblasen werden. Der Aufblasvorgang kann auch stufenweise mittels eines Stufengasgenerators durchgeführt werden, so daß zunächst der Tast-Airbag 4 und anschließend der Aufprallschutz-Airbag 1 aktiviert wird. Der Tast-Airbag 4 steht mit Sensoren in Verbindung, so daß eine Information über den vor dem Tast-Airbag 4 angeordneten Gegenstand oder die vor dem Tast-Airbag 4 angeordnete Person gewonnen werden kann. Durch den Tast-Airbag 4 wird der Bereich vor der Instrumententafel 2 überwacht. Anschließend kann diese Information zum gezielten Aufblasen des Aufprallschutz-Airbags 1 verwendet werden, während der Tast-Airbag 4 nach Erfüllung seiner Funktion erschlafft und eine gestrichelte Position 4' einnimmt. Daher kann der Aufprallschutz-Airbag 1 situationsgerecht entweder vollständig, teilweise oder gar nicht aufgeblasen werden. Zur Erhöhung der Informationssicherheit sind Gewichtssensoren 5 am Fahrzeugsitz 3 vorgesehen, mit deren Hilfe die fahrzeugbezogene Lage des Insassenschwerpunkts bzw. der Abstand des Fahrzeuginsassen zur Instrumententafel 2 erfaßt werden kann. Außerdem kann der Belegungszustand des Fahrzeugsitzes 3 ermittelt werden. Im Fußraum ist ein Gewichtssensor 6 ausgebildet, der weitere Informationen über den Fahrzeuginsassen liefern kann, so daß der Aufprallschutz-Airbag 1 zum Schutz des Fahrzeuginsassen bestmöglich eingesetzt werden kann. Die Gewichtssensoren 5 und 6 und eine Steuereinheit des Aufprallschutz-Airbags 1 und des Tast-Airbags 4 sind über einen Algorithmus miteinander gekoppelt.

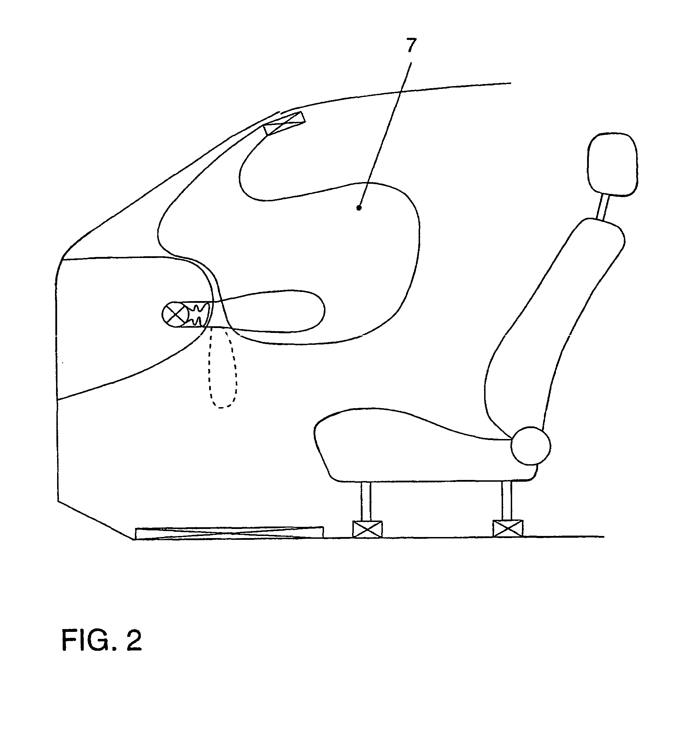

Der Aufprallschutz-Airbag 7 der Aufprallschutzvorrichtung gemäß **Fig. 2** ist durch einen den Kopfbereich eines Fahrzeuginsassen schützenden Kopfairbag ausgebildet. Dieser Aufprallschutz-Airbag 7 dient auch dem Schutz des Oberkörpers eines Fahrzeuginsassen. Er erfüllt die gleiche Funktion wie der Aufprallschutz-Airbag 1 und unterscheidet sich lediglich durch eine andere Einbaulage.

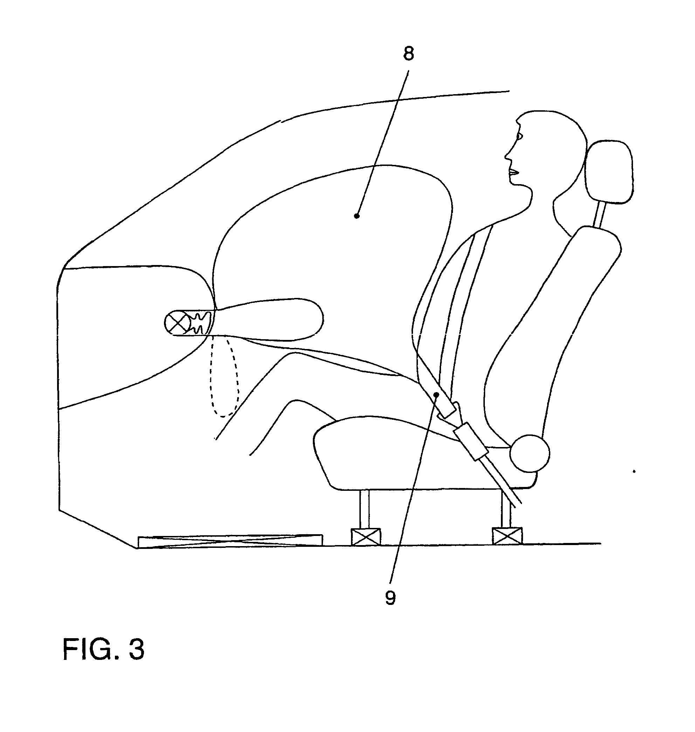

Der Aufprallschutz-Airbag 8 der Aufprallschutzvorrichtung gemäß **Fig. 3** ist durch einen Airbag ausgebildet, der aus einem Beckengurt 9 ausgetreten ist und auch als Seitenaufprallschutz dienen kann.

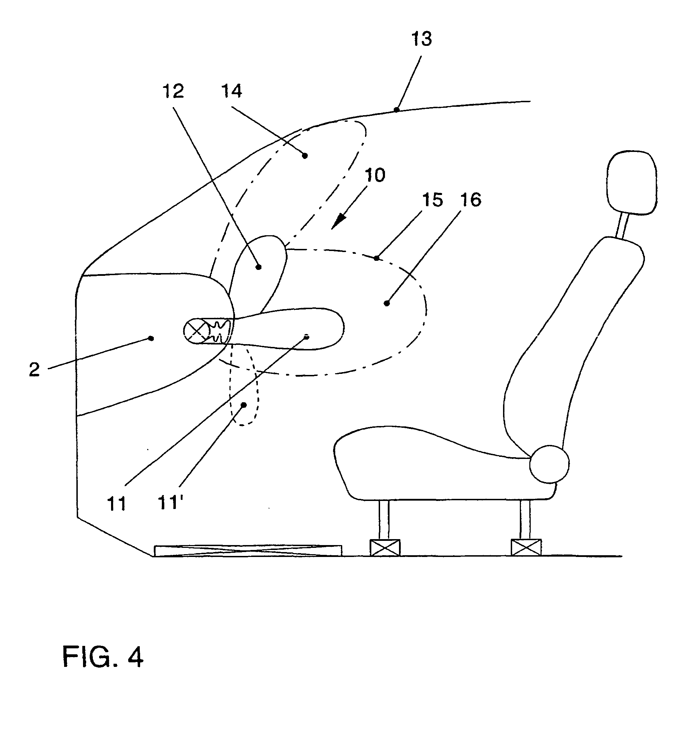

**Fig. 4** zeigt, wie ein Tast-Airbag 10 aufgebaut sein kann. Der Tast-Airbag 10 ist in zwei getrennte Luftsäcke 11 und 12 unterteilt, die aufgeblasen dargestellt sind. Nach Gebrauch erschlaffen die Luftsäcke und nehmen die gestrichelte Lage 11' ein. Die Luftsäcke 11 und 12 werden von einem Zweistufengasgenerator befüllt und aktiviert. Der Luftsack 12 entfaltet sich schräg nach oben in Richtung Fahrzeugdach 13 annähernd tangential zur Instrumententafel 2. Der Luftsack 12 kann bei einem Fahrzeugunfall auch die Hände und Arme des Fahrzeuginsassen, die sich beim Fahrzeugunfall in Richtung Instrumententafel bewegen, nach oben wegdrücken. Der Luftsack 11 ist dagegen für die eigentliche Abtastung des Fahrzeuginnenraums vor der Instrumententafel 2 ausgebildet. Dieser erkennt beispielsweise, ob sich ein Kind oder ein Erwachsener vor der Instrumententafel 2 befindet. Wenn sich ein Kind vor der Instrumententafel 2 befindet, wird nur der Teilbereich 14 eines gestrichelt angedeuteten Aufprallschutz-Airbag 15, der aus dem Dachbereich austreten kann, aufgeblasen. Wenn sich ein Erwachsener vor der Instrumententafel 2 befindet, werden die Teilbereiche 14 und 16 des Aufprallschutz-Airbags 15 aktiviert. Der Aufprallschutz-Airbag 15 kann mit Hilfe des Tast-Airbags 10 unterschiedlich reagieren.

An Stelle der sich unter einem Winkel zueinander entfaltenden Luftsäcke 11 und 12 können die Luftsäcke des Tast-Airbags auch parallel zueinander aufgeblasen werden. Es lassen sich auch drei oder mehrere Luftsäcke übereinander anordnen, die alle eine Tastfunktion ausüben. Durch die Übereinander-Anordnung bekommt man eine Information über die Größe/Höhe der Person vor der Instrumententafel 2. Es kann eine noch bessere Unterscheidung zwischen Händen eines Erwachsenen und einem stehenden Kind erfolgen.

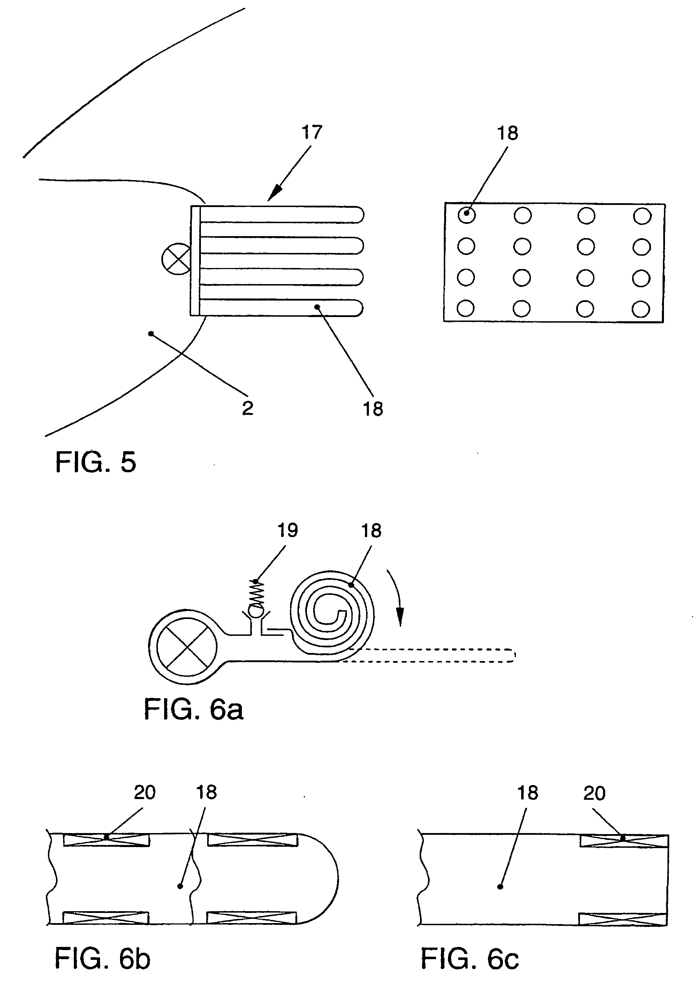

Ein Tast-Airbag 17 der **Fig. 5** umfaßt mehrere Luftschläuche 18, die in Form einer 4x4-Matrix angeordnet sind. Eine Information über die Kontur der vor der Instrumententafel 2 befindlichen Person wird möglich. Zum Aufblasen der Luftschläuche wird ein Gasgenerator verwendet, der über einen Gasverteiler an die Luftschläuche 18 angeschlossen ist.

Die Tastfunktion der Luftschläuche 18 ist in **Fig. 6a** dargestellt. Die Luftschläuche 18 können sich spiralförmig entrollen, wenn sie aufgeblasen werden. Trifft der ausgerollte Luftschlauch auf eine Person, wird der Ausroll-Vorgang gestoppt. Der Luftschlauch 18 wird nicht weiter mit einem Gas befüllt, weil ein Überdruckventil 19 dies verhindert. Trifft der Luftschlauch 18 nicht auf ein Hindernis, wird er vollständig aufgeblasen. Kontaktflächen 20 des Luftschlauchs 18 sind an der Außenumfangsfläche des Luftschlauchs 18 ausgebildet, um den Aufprall des Luftschlauchs 18 auf ein Hindernis zu detektieren und auswerten zu können (**Fig. 6b, Fig. 6c**). Die Kontaktflächen 20 können über die gesamte Schlauchlänge (Fig. 6b) und/oder am Schlauchende ausgebildet sein. Beim Aufprall des Luftschlauchs 18 erhält man eine Information über die entfaltete Länge des Luftschlauchs 18 bzw. den Abstand einer Person zur Instrumententafel.

### BEZUGSZEICHENLISTE

- 1: Aufprallschutz-Airbag
- 2: Instrumententafel
- 3: Fahrzeugsitz
- 4: Tast-Airbag
- 5: Gewichtssensor
- 6: Gewichtssensor
- 7: Aufprallschutz-Airbag
- 8: Aufprallschutz-Airbag
- 9: Beckengurt
- 10: Tast-Airbag
- 11: Luftsack
- 11': Luftsack
- 12: Luftsack
- 13: Fahrzeugdach
- 14: Teilbereich
- 15: Aufprallschutz-Airbag
- 16: Teilbereich
- 17: Tast-Airbag
- 18: Luftschlauch
- 19: Überdruckventil
- 20: Kontaktfläche

## Patentansprüche

1. Aufprallschutzvorrichtung für Fahrzeuginsassen mit einem ersten aufblasbaren, zum Schutz des Fahrzeuginsassen vorgesehenen Airbag (1; 7; 8; 15) und mit Mitteln zum kontrollierten Aufblasen des ersten Airbags (1; 7; 8; 15),
**dadurch gekennzeichnet,**
**dass** die Aufprallschutzvorrichtung einen zweiten, mit Sensor-Mitteln versehenen, aufblasbaren Airbag (4; 10; 17) aufweist, der zur Abtastung einer festgelegten Zone im Aufblasbereich des ersten Airbags (1; 7; 8; 15) vorgesehen ist, wobei die vom Sensor-Mittel gewonnene Information zur Steuerung der Mittel zum kontrollierten Aufblasen des ersten Airbags (1; 7; 8; 15) verwendet wird.

2. Aufprallschutzvorrichtung nach Anspruch 1, **dadurch gekennzeichnet, daß** der zweite Airbag (4; 10; 17) mit Sensoren zur Überwachung des Aufblasverhaltens des zweiten Airbags (4; 10; 17) versehen ist.

3. Aufpraiischutzvorrichtung nach Anspruch 2, **dadurch gekennzeichnet, daß** die Sensoren durch Bänder oder dergleichen ausgebildet sind, die je nach Erstreckung des Airbags (4; 10; 17) reißen oder deren Länge im ausgezogenen Zustand gemessen wird.

4. Aufprallschutzvorrichtung nach Anspruch 2, **dadurch gekennzeichnet, daß** die Sensoren durch im nicht-aktivierten Zustand des Airbags übereinander liegende und im aktivierten Zustand voneinander beabstandete Kontaktfolien oder Kontaktdrähte ausgebildet sind

5. Aufprallschutzvorrichtung nach Anspruch 2, **dadurch gekennzeichnet, daß** die Sensoren durch eine auf der Außenumfangsfläche des zweiten Airbags angeordnete druckempfindliche Folie ausgebildet sind.

6. Aufprallschutzvorrichtung nach Anspruch 2, **dadurch gekennzeichnet, daß** im Inneren des zweiten Airbags ein Sensor angeordnet ist, der den Innendruck des aufgeblasenen zweiten Airbags erfassen kann.

7. Aufprallschutzvorrichtung nach einem der vorhergehenden Ansprüche, **dadurch gekennzeichnet, daß** am Fahrzeugsitz (3) ein das Gewicht des Fahrzeuginsassen erfassender Gewichtssensor (5) angeordnet ist.

8. Aufprallschutzvorrichtung nach einem der vorhergehenden Ansprüche, **dadurch gekennzeichnet, daß** im Fußbereich vor dem Fahrzeugsitz (3) ein das Gewicht des Fahrzeuginsassen erfassender Gewichtssensor (6) angeordnet ist.

9. Aufprallschutzvorrichtung nach einem der vorhergehenden Ansprüche, **dadurch gekennzeichnet, daß** erste Airbag (1) in der Instrumententafel (2) untergebracht ist.

10. Aufprallschutzvorrichtung nach einem der Ansprüche 1 bis 8, **dadurch gekennzeichnet, daß** der erste Airbag (7) im Dachbereich angeordnet ist.

11. Aufprallschutzvorrichtung nach einem der Ansprüche 1 bis 8, **dadurch gekennzeichnet, daß** der erste Airbag (8) im Beckengurtbereich angeordnet ist.

12. Aufprallschutzvorrichtung nach einem der vorhergehenden Ansprüche, **dadurch gekennzeichnet, daß** der zweite Airbag (10) aus zwei Luftsäcken (11, 12) besteht.

13. Aufprallschutzvorrichtung nach einem der vorhergehenden Ansprüche, **dadurch gekennzeichnet, daß** mehrere zweite Airbags (4; 10; 17) vorgesehen, vorzugsweise übereinander angeordnet sind.

14. Aufprallschutzvorrichtung nach Anspruch 13, **dadurch gekennzeichnet, daß** der zweite Airbag (17) mehrere Luftschläuche (18) umfaßt, die in Form einer nxn-Matrix, vorzugsweise einer 4x4-Matrix, angeordnet sind.

## Claims

1. Impact protection device for vehicle occupants, having a first inflatable airbag (1; 7; 8; 15) provided to protect the vehicle occupant, and having means for the controlled inflation of the first airbag (1; 7; 8; 15), **characterized in that** the impact protection device has a second inflatable airbag (4; 10; 17) which is provided with sensor means and is provided for scanning a defined zone in the inflation region of the first airbag (1; 7; 8; 15), the information obtained by the sensor means being used to control the means for the controlled inflation of the first airbag (1; 7; 8; 15).

2. Impact protection device according to Claim 1, **characterized in that** the second airbag (4; 10; 17) is provided with sensors for monitoring the inflation behaviour of the second airbag (4; 10; 17).

3. Impact protection device according to Claim 2, **characterized in that** the sensors are formed by tapes or the like which, depending on the extension of the airbag (4; 10; 17), tear or their length when extended is measured.

4. Impact protection device according to Claim 2, **characterized in that** the sensors are formed by contact films or contact wires which lie one above another in the inactivated state of the airbag and are spaced apart from one another in the activated state.

5. Impact protection device according to Claim 2, **characterized in that** the sensors are formed by a pressure-sensitive film arranged on the outer circumferential surface of the second airbag.

6. Impact protection device according to Claim 2, **characterized in that** a sensor is arranged in the interior of the second airbag and can detect the internal pressure of the inflated second airbag.

7. Impact protection device according to one of the preceding claims, **characterized in that** a weight sensor (5) which detects the weight of the vehicle occupant is arranged on the vehicle seat (3).

8. Impact protection device according to one of the preceding claims, **characterized in that** a weight sensor (6) which detects the weight of the vehicle occupant is arranged in the foot region in front of the vehicle seat (3).

9. Impact protection device according to one of the preceding claims, **characterized in that** the first airbag (1) is accommodated in the instrument panel (2).

10. Impact protection device according to one of Claims 1 to 8, **characterized in that** the first airbag (7) is arranged in the roof region.

11. Impact protection device according to one of Claims 1 to 8, **characterized in that** the first airbag (8) is arranged in the lap belt region.

12. Impact protection device according to one of the preceding claims, **characterized in that** the second airbag (10) is composed of two air cushions (11, 12).

13. Impact protection device according to one of the preceding claims, **characterized in that** a plurality of second airbags (4; 10; 17) are provided, preferably arranged one above another.

14. Impact protection device according to Claim 13, **characterized in that** the second airbag (17) comprises a plurality of air tubes (18) which are arranged in the form of an nxn matrix, preferably a 4x4 matrix.

## Revendications

1. Dispositif de protection contre les chocs pour les occupants d'un véhicule comprenant un premier airbag (1 ; 7 ; 8 ; 15) gonflable, prévu pour protéger l'occupant du véhicule et de moyens pour gonfler de manière contrôlée le premier airbag (1 ; 7 ; 8 ; 15),
**caractérisé en ce que**
le dispositif de protection contre les chocs présente un deuxième airbag gonflable (4 ; 10 ; 17) pourvu de moyens de détection, qui est prévu pour palper une zone déterminée dans la région de gonflage du premier airbag (1 ; 7 ; 8 ; 15), l'information obtenue par le moyen de détection étant utilisée pour commander les moyens pour gonfler de manière contrôlée le premier airbag (1 ; 7 ; 8 ; 15).

2. Dispositif de protection contre les chocs selon la revendication 1, **caractérisé en ce que** le deuxième airbag (4 ; 10 ; 17) est pourvu de détecteurs pour la surveillance du comportement de gonflage du deuxième airbag (4 ; 10 ; 17).

3. Dispositif de protection contre les chocs selon la revendication 2, **caractérisé en ce que** les détecteurs sont réalisés par des bandes ou similaires qui se déchirent en fonction de l'extension de l'airbag (4 ; 10 ; 17) ou dont la longueur dans l'état étiré est mesurée.

4. Dispositif de protection contre les chocs selon la revendication 2, **caractérisé en ce que** les détecteurs sont réalisés par des feuilles de contact ou des fils de contact superposés dans l'état non activé de l'airbag et espacés les uns des autres dans l'état activé.

5. Dispositif de protection contre les chocs selon la revendication 2, **caractérisé en ce que** les détecteurs sont réalisés par une feuille sensible à la pression disposée sur la surface périphérique extérieure du deuxième airbag.

6. Dispositif de protection contre les chocs selon la revendication 2, **caractérisé en ce qu'**un détecteur est disposé à l'intérieur du deuxième airbag, lequel peut détecter la pression interne du deuxième airbag gonflé.

7. Dispositif de protection contre les chocs selon l'une quelconque des revendications précédentes, **caractérisé en ce qu'**un détecteur de poids (5) détectant le poids de l'occupant du véhicule est disposé sur le siège du véhicule (3).

8. Dispositif de protection contre les chocs selon l'une quelconque des revendications précédentes, **caractérisé en ce qu'**un détecteur de poids (6) détectant le poids de l'occupant du véhicule est disposé dans la région des pieds devant le siège du véhicule (3).

9. Dispositif de protection contre les chocs selon l'une quelconque des revendications précédentes, **caractérisé en ce que** le premier airbag (1) est installé dans le tableau de bord (2).

10. Dispositif de protection contre les chocs selon l'une quelconque des revendications 1 à 8, **caractérisé en ce que** le premier airbag (7) est disposé dans la région du toit.

11. Dispositif de protection contre les chocs selon l'une quelconque des revendications 1 à 8, **caractérisé en ce que** le premier airbag (8) est disposé dans la région de la ceinture du bassin.

12. Dispositif de protection contre les chocs selon l'une quelconque des revendications précédentes, **caractérisé en ce que** le deuxième airbag (10) se compose de deux sacs d'air (11, 12).

13. Dispositif de protection contre les chocs selon l'une quelconque des revendications précédentes, **caractérisé en ce que** l'on prévoit plusieurs deuxièmes airbags (4 ; 10 ; 17) de préférence disposés les uns au-dessus des autres.

14. Dispositif de protection contre les chocs selon la revendication 13, **caractérisé en ce que** le deuxième airbag (17) comprend plusieurs tuyaux d'air (18), qui sont disposés suivant la forme d'une matrice nxn, de préférence d'une matrice 4x4.
